# EUROPEAN PATENT APPLICATION

(11) **EP 4 745 929 A1**
(43) Date of publication of application: **20.05.2026**
(21) Application number: 24867932.6
(22) Date of filing: 01.08.2024
(51) Int. Cl.: G07G 1/00, G06Q 30/06, G07G 1/01

(54) **SETTLEMENT DEVICE AND PROGRAM RECORDING MEDIUM**

(30) Priority: 19.09.2023 JP 2023151565
(71) Applicant: Toshiba TEC Kabushiki Kaisha, Tokyo 141-8562 (JP)
(72) Inventor: FUKUZAWA, Ichiro, Tokyo 141-8562 (JP)
(74) Representative: Bandpay & Greuter
(86) International application number: PCT/JP2024/027580
(87) International publication number: WO 2025/062851

(57) **Abstract**

A settlement apparatus acquires identification information for identifying a transaction with a transaction subject at an upstream portion of a passage. A determination unit determines whether the transaction identified by the identification information has been settled. The settlement apparatus controls an operation of a first mode in which a notification is performed when detecting a person passing through the passage, from after the transaction subject whose transaction has been settled passes through the passage, until a transaction with a next transaction subject has been determined to be settled. The settlement apparatus controls an operation in a second mode where a notification is not performed when detecting a person passing through the passage, until a predetermined time elapses from after the transaction is determined to have been settled, or until a transaction subject whose transaction has been determined to be settled passes through the passage within a predetermined time.

## Description

### FIELD

Embodiments described herein relate to a settlement apparatus and a program recording medium.

### BACKGROUND

In recent years, a mobile settlement system has been developed in which a transaction subject referred to as a customer, a consumer, a purchaser, or the like operates a mobile terminal to perform actions from registration of products to be purchased to settlement of payment, and the system has already been put into practical use in a supermarket or the like. A store can alleviate congestion at accounting counters (cash registers) by introducing the mobile settlement system. In addition, since the store can reduce the number of employees in charge of accounting, personnel expenses may be reduced. However, on the other hand, since a store clerk is not involved in settlements, there is a concern that fraud in which the transaction subject leaves the store without performing settlement is likely to occur. Such an issue may also occur in stores that have introduced a self-type settlement apparatus that enables the transaction subject to perform actions from registration of products to be purchased to settlement of payment at the accounting counter by himself/herself.

### CITATION LIST

### PATENT LITERATURE

[PTL 1] Jpn. Pat. Appln. KOKAI Publication No. 2023-012677

### SUMMARY

A problem to be solved by embodiments of the present invention is to provide a settlement apparatus that can prevent fraud in which a transaction subject leaves a store without performing settlement.

### BRIEF DESCRIPTION OF THE DRAWING(S)

FIG. 1 is a schematic diagram illustrating a schematic configuration of a store system according to the present embodiment.
FIG. 2 is a schematic diagram illustrating main data described in a transaction file.
FIG. 3 is a block diagram illustrating a circuit configuration of main parts of a first POS terminal.
FIG. 4 is a perspective view illustrating an example of a gate mechanism.
FIG. 5 is a schematic diagram illustrating a main functional configuration of a processor of the first POS terminal.
FIG. 6 is a flowchart illustrating a procedure of main information processing executed by the processor of the first POS terminal.
FIG. 7 is a flowchart illustrating a procedure of main information processing executed by the processor of the first POS terminal.
FIG. 8 is a flowchart illustrating a procedure of main information processing executed by the processor of the first POS terminal.
FIG. 9 is an example of a passage not permitted image displayed on a touch panel and a display.
FIG. 10 is an example of a warning image displayed on the touch panel and the display.
FIG. 11 is an example of a store clerk call image displayed on the touch panel and the display.
FIG. 12 is an example of a passage permitted image displayed on the touch panel and the display.
FIG. 13 is a sequence diagram illustrating a correspondence relationship between an operation mode of the first POS terminal and information processing.

### DETAILED DESCRIPTION

In one embodiment, a settlement apparatus includes a settlement unit, a reception unit, an acquisition unit, a determination unit, and a control unit. The settlement unit settles a transaction with a transaction subject at an upstream portion of a passage through which the transaction subject passes. The reception unit receives a signal output from a detector that can detect a person passing through the passage. The acquisition unit acquires identification information for identifying a transaction with a transaction subject at an upstream portion of the passage. The determination unit determines whether or not the transaction identified by the identification information acquired by the acquisition unit has been settled. The control unit controls an operation in a first mode in which notification is performed in response to a detector detecting a person passing through the passage, from after a transaction subject who has settled the transaction passes through the passage, until a transaction with a next transaction subject is determined to be settled. The control unit controls an operation in a second mode in which no notification is performed in response to the detector detecting a person passing through the passage, until a predetermined time elapses after the transaction is determined to be settled or until the transaction subject who has been determined to have settled the transaction passes through the passage within the predetermined time.

Hereinafter, an embodiment of a settlement apparatus that can prevent fraud in which a transaction subject referred to as a customer, a consumer, a purchaser, or the like leaves a store without performing settlement will be described with reference to the drawings.

This embodiment exemplifies a settlement apparatus applied to a store to which a mobile settlement system has been introduced. The mobile settlement system enables a transaction subject to register products to be purchased by himself/herself using a mobile terminal.

### (Schematic Explanation of Store System (POS System))

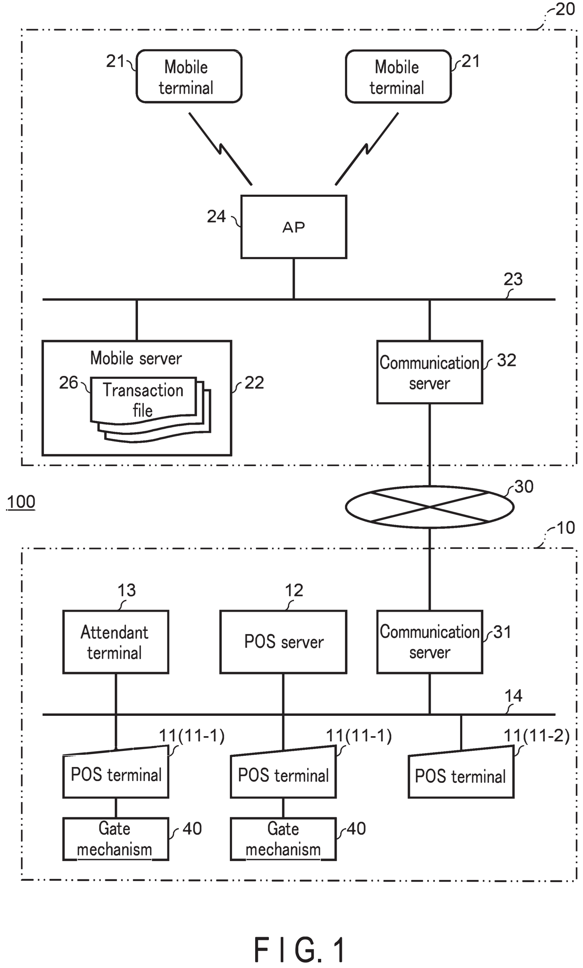

FIG. 1 is a schematic diagram illustrating a schematic configuration of a store system 100 constructed in a store in which a mobile settlement system 20 is introduced. The store system 100 includes a point of sales (POS) system 10 and a mobile settlement system 20.

The POS system 10 includes a plurality of POS terminals 11, a POS server 12, and an attendant terminal 13. The POS system 10 connects a plurality of POS terminals 11, a POS server 12, and an attendant terminal 13 via a communication network 14. The communication network 14 is, for example, a local area network (LAN). Although only one attendant terminal 13 is shown in FIG. 1, two or more attendant terminals 13 may be connected to the communication network 14 to configure the POS system 10.

The POS terminals 11 include a first POS terminal 11-1 associated with a gate mechanism 40 in a one-to-one manner and a second POS terminal 11-2 not associated with the gate mechanism 40. The gate mechanism 40 and the first POS terminal 11-1 will be described in detail later.

The second POS terminal 11-2 is a device for registering a product sold and purchased between a store as a seller and a transaction subject as a buyer and settling a transaction in which the product registration has been performed. As the second POS terminal 11-2, a well-known POS terminal which is also referred to as a product registration device, an accounting machine, a settlement terminal, or the like can be applied as it is. That is, the second POS terminal 11-2 may be a face-to-face type terminal in which an employee performs processes from registration of a product to settlement of a transaction, or may be a self-type terminal in which a transaction subject performs the processes from registration of a product to settlement of a transaction. Alternatively, the system may be a shared system in which an employee registers a product and a transaction subject settles the transaction.

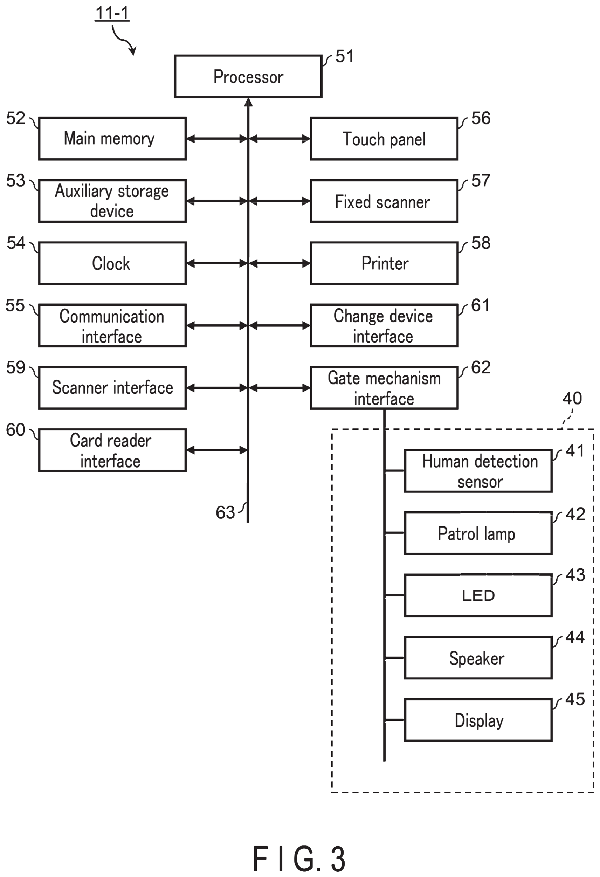

The second POS terminal 11-2 may be an accounting machine dedicated to accounting processing. The second POS terminal 11-2 has a function of issuing a receipt on which details of a transaction such as a transaction number, a transaction date and time, product sales data, total data, and payment data are recorded every time the transaction is settled. A machine-readable code such as a bar code or a two-dimensional code is printed on the receipt. The machine-readable code includes a transaction number recorded on the receipt. The machine-readable code is read by, for example, a fixed scanner 57 (see FIG. 3) of the gate mechanism 40. The machine-readable code may be displayed in the form of an electronic receipt on a mobile terminal possessed by the transaction subject. In this case, the electronic receipt includes information in which details of the transaction such as a transaction number, a transaction date and time, product sales data, total data, and payment data are recorded, similarly to the printed receipt. The machine-readable code such as a bar code or a two-dimensional code is displayed on the electronic receipt. Note that, the machine-readable code such as a bar code or a two-dimensional code may be displayed on a mobile terminal possessed by a transaction subject in a readable manner without displaying information in which details of a transaction are recorded.

The POS server 12 is a computer that performs a service of managing information such as sales and inventory of a store at the time of product sales by collecting and summing sales data of each product registered in each POS terminal 11 via the communication network 14.

The attendant terminal 13 is installed at an attendant counter where a store clerk called an attendant is stationed full time. The attendant terminal 13 includes a display device and is used by an attendant to monitor input contents and the like to each POS terminal 11. Specifically, the attendant terminal 13 displays information processed by each POS terminal 11 on the display device in real time for each POS terminal 11. The information displayed on the display device includes information related to the product registered in the POS terminal 11, for example, a product name, a price, a quantity, and the like. Information related to the settlement, for example, a total amount of the transaction (settlement amount), a payment amount for each payment method, and the like are also displayed on the display device. The attendant terminal 13 may be a hand-held terminal carried by a store clerk.

### (Schematic Explanation of Store System (Mobile Settlement System))

The mobile settlement system 20 includes a plurality of mobile terminals 21 and a mobile server 22. The mobile settlement system 20 connects a plurality of mobile terminals 21 and a mobile server 22 wirelessly via an access point 24 of a communication network 23.

The mobile terminal 21 is a portable information terminal including an input/output device such as a touch panel or a camera, and a wireless communication unit that can wirelessly communicate with the access point 24. For example, a smartphone possessed by the transaction subject, a hand-held terminal rented from a store, a tablet terminal attached to a shopping cart, or the like may be the mobile terminal 21. For example, in the case of a smartphone, the smartphone becomes the mobile terminal 21 by installing application software for supporting shopping by a transaction subject in a store in which the mobile settlement system 20 has been introduced, that is, a so-called shopping application.

An operator of the mobile terminal 21 is a transaction subject who collects the products to be purchased while moving around a sales floor. The transaction subject operates the mobile terminal 21 every time the transaction subject acquires the product to be purchased, and inputs data related to the product to be purchased. For example, the transaction subject inputs a product code of the product to be purchased by scanning the bar code of the product to be purchased with a camera of the mobile terminal 21. For example, the transaction subject inputs the product code of the product to be purchased, the number of products to be purchased, and the like by operating the touch panel of the mobile terminal 21. The data related to the product to be purchased input to the mobile terminal 21 is wirelessly transmitted and received by the mobile server 22 via the access point 24.

The transaction subject who has finished shopping performs an operation of instructing accounting to the mobile terminal 21. By performing the operation of instructing the accounting, the machine-readable code for accounting is displayed on the display device of the mobile terminal 21. The machine-readable code is, for example, a bar code or a two-dimensional code. In the present embodiment, the machine-readable code for accounting is a bar code. The transaction subject can perform settlement at the POS terminal 11 by causing the scanner of the POS terminal 11 to read the bar code for accounting. The settlement at the POS terminal 11 may be cashless settlement such as electronic money settlement, credit card settlement, or code settlement, or may be settlement by cash or a cash voucher such as a gift voucher.

In addition, in a case where application software for cashless settlement, that is, a so-called settlement application, is installed in the mobile terminal 21, settlement by the mobile terminal 21 is possible. The settlement is cashless settlement such as electronic money settlement, credit card settlement, or code settlement. In the case where the transaction subject performs an operation for cashless settlement on the mobile terminal 21, payment data is wirelessly transmitted from the mobile terminal 21. The payment data includes a payment type indicating a payment method and a payment amount. For example, in a case where the consumer performs cashless settlement using electronic money, payment data including information of the payment type indicating electronic money and the payment amount by electronic money is wirelessly transmitted. The wirelessly transmitted payment data is received by the mobile server 22 via the access point 24.

The mobile server 22 is a computer for supporting a transaction with a transaction subject who registers a product to be purchased using the mobile terminal 21. The mobile server 22 has a storage region to store a plurality of transaction files 26. The transaction files 26 are data files created for each transaction using the mobile terminal 21.

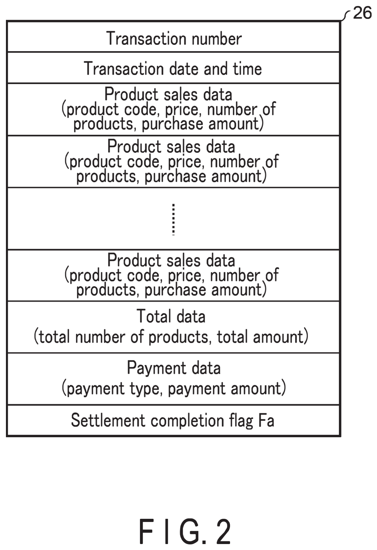

FIG. 2 is a schematic diagram illustrating main data described in the transaction file 26. As illustrated in the figure, the transaction file 26 describes a transaction number, a transaction date and time, one or more pieces of product sales data, total data, payment data, a settlement completion flag Fa, and the like.

The transaction number is a unique number issued to individually identify a transaction using the mobile terminal 21. For example, the transaction number is a serial number that is incremented by "1" each time a transaction using the mobile terminal 21 is started. The transaction number may be a serial number that is incremented by "1" each time accounting of a transaction using the mobile terminal 21 is instructed. The transaction number may be a unique number based on other algorithms. The bar code for accounting represents data including the transaction number in the form of a bar code.

The transaction date and time is a date and time at which the transaction has been performed. The time may be a time at which the transaction has started or a time at which accounting of the transaction has been instructed.

The product sales data is created based on data related to the product to be purchased input to the mobile terminal 21. The product sales data includes a product code, a price, the number of products to be purchased, a purchase amount, and the like of the products to be purchased. The product code is an identification code of the product to be purchased input to the mobile terminal 21. The price is a price acquired from a price look-up (PLU) file in which a price of the product is set in association with a product code of each product. The number of products to be purchased is the number of products to be purchased in a case where the number of purchased products is input to the mobile terminal 21, and is "1" in a case where the number of products to be purchased is not input. The purchase amount is an amount calculated by multiplying the price by the number of purchased products.

The total data is composed of data of the total number of products and the total amount. The total number of products is the total of the number of products to be purchased of the product sales data included in the transaction file 26. The total amount is the total of the purchase amounts of the product sales data included in the transaction file 26.

The payment data includes a payment type for identifying a payment method and a payment amount by the payment method. In the case where the settlement of the transaction specified by the transaction number is performed using the mobile terminal 21, the payment data is stored based on the data from the mobile terminal 21. In a case where the settlement of the transaction is performed by the POS terminal 11, payment data is stored based on the data from the POS terminal 11.

The settlement completion flag Fa is 1-bit data for identifying whether or not the settlement of the transaction managed by the transaction file 26 is completed. In the present embodiment, the settlement completion flag Fa indicating that the settlement is not completed is set to "0", and the settlement completion flag Fa indicating that the settlement is completed is set to "1". In a case where the settlement of the transaction specified by the transaction number is performed using the mobile terminal 21, the settlement completion flag Fa changes from "0" to "1". Also, in a case where the settlement of the transaction is performed by the POS terminal 11, the settlement completion flag Fa is changed from "0" to "1".

The explanation returns to FIG. 1.

The POS system 10 connects a communication server 31 to the communication network 14. The mobile settlement system 20 connects a communication server 32 to the communication network 23. The communication server 31 and the communication server 32 both perform data communication services via an inter-server network 30. With such a connection, each POS terminal 11 and the POS server 12 in the POS system 10 and each mobile terminal 21 and the mobile server 22 in the mobile settlement system 20 can transmit and receive data to and from each other. Through this data communication, the data of the transaction processed by the mobile settlement system 20 is taken into the POS system 10.

### (Explanation of Configuration of First POS Terminal)

FIG. 3 is a block diagram showing a circuit configuration of main parts of the first POS terminal 11-1. The first POS terminal 11-1 includes a processor 51, a main memory 52, an auxiliary storage device 53, a clock 54, a communication interface 55, a touch panel 56, a fixed scanner 57, a printer 58, a scanner interface 59, a card reader interface 60, a change device interface 61, a gate mechanism interface 62, a system transmission path 63, and the like. The system transmission path 63 includes an address bus, a data bus, a control signal line, and the like. The system transmission path 63 connects the processor 51 and the other units, and transmits data signals exchanged between them.

The first POS terminal 11-1 configures a computer by connecting the processor 51, the main memory 52, the auxiliary storage device 53, the clock 54, and the communication interface 55 through the system transmission path 63. The input/output devices such as the touch panel 56, the fixed scanner 57, and the printer 58 and the device interfaces such as the scanner interface 59, the card reader interface 60, the change device interface 61, and the gate mechanism interface 62 are connected to the system transmission path 63 and are controlled by the computer, thus realizing the function as the first POS terminal 11-1. The input/output devices or the device interfaces connected to the system transmission path 63 are not limited to the above. For example, another input/output device such as a keyboard may be connected, or an interface of a cashless settlement terminal or the like may be connected.

The processor 51 corresponds to a central part of the computer. The processor 51 controls each unit to realize various functions as the first POS terminal 11-1 according to an operating system or an application program. The processor 51 may be, for example, a processing circuit such as a central processing unit (CPU), a graphics processing unit (GPU), an application specific integrated circuit (ASIC), a programmable logic device (for example, a simple programmable logic device (SPLD), a complex programmable logic device (CPLD), or a field programmable gate array (FPGA)). The processor 51 is not limited to a case in which the processor 51 is configured as a single processing circuit, and a plurality of processing circuits may be combined to configure a processor 111. The processor 51 is preferably a multi-core processor that includes a plurality of processor cores and that can execute a plurality of processes in parallel.

The main memory 52 corresponds to a main storage part of the computer. The main memory 52 includes a nonvolatile memory region and a volatile memory region. The main memory 52 stores an operating system or an application program in the nonvolatile memory region. The main memory 52 may store data necessary for the processor 51 to execute a process to control each unit in the nonvolatile or volatile memory region. The main memory 52 uses the volatile memory region as a work area in which data is appropriately rewritten by the processor 51. The nonvolatile memory region is, for example, a read only memory (ROM). The volatile memory region is, for example, a random access memory (RAM).

The auxiliary storage device 53 corresponds to an auxiliary storage part of the computer. For example, an electrically erasable programmable read-only memory (EEPROM), a hard disk drive (HDD), a solid-state drive (SSD), or the like may be the auxiliary storage device 53. The auxiliary storage device 53 stores data to be used by the processor 51 to perform various processes, data created by the process in the processor 51, and the like. The auxiliary storage device 53 may store the application program.

The clock 54 measures a date and time. The processor 51 processes the date and time measured by the clock 54 as a current date and time.

The communication interface 55 is an interface for performing data communication with the POS server 12, the attendant terminal 13, and the like connected to the communication network 14.

The touch panel 56 includes a display that functions as a display device of the first POS terminal 11-1 and a touch sensor that functions as an input device. The touch panel 56 displays various information on the display to the transaction subject who is the user of the first POS terminal 11-1 or the store clerk. The touch panel 56 detects a touch operation on a screen of the display by a touch sensor, and receives an input corresponding to the touch position.

The fixed scanner 57 is an input device that scans and reads a machine-readable code such as a bar code or a two-dimensional code. The fixed scanner 57 can read a machine-readable code displayed on a display of the mobile terminal 21, for example. The fixed scanner 57 can also read a machine-readable code printed on an ID card carried by a store clerk. A machine-readable code indicating an identification code unique to a store clerk, that is, a so-called employee code, is printed on an ID card carried by the store clerk.

The printer 58 is a printing device to print and issue a receipt. The receipt is a paper medium on which details of a transaction such as a transaction number, a transaction date and time, product sales data, total data, and payment data are recorded.

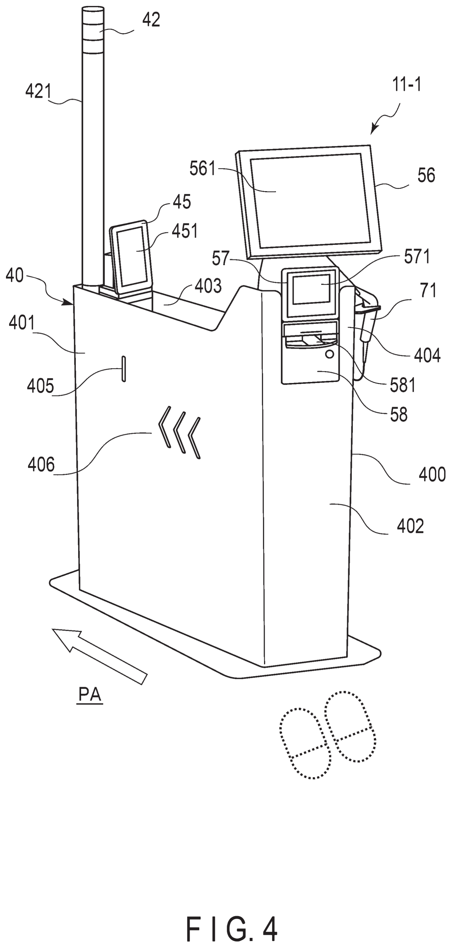

The scanner interface 59 is an interface that can perform data communication with a hand-held scanner 71 (see FIG. 4). The hand-held scanner 71 is a portable scanner, and is an input device that scans and reads a machine-readable code similar to the fixed scanner.

The card reader interface 60 is an interface that can perform data communication with a card reader. The card reader is, for example, an input device that reads data recorded on a card medium such as a credit card, an electronic money card, or a loyalty card. The card reader may be an IC card reader that reads data of an IC card, or may be a magnetic card reader that reads data of a magnetic card. The IC card reader may be a contact IC card reader or a non-contact IC card reader.

The change device interface 61 is an interface that can perform data communication with an automatic change device that can receive a deposit and dispense change.

The gate mechanism interface 62 is an interface that can perform data communication with each of the devices included in the gate mechanism 40, for example, a human detection sensor 41, a patrol lamp 42, an LED 43, a speaker 44, a display 45, and the like.

### (Explanation of Configuration of Gate Mechanism)

FIG. 4 is a perspective view illustrating an example of the gate mechanism 40 associated with the first POS terminal 11-1 in a one-to-one correspondence. The gate mechanism 40 includes a housing 400 having a substantially rectangular parallelepiped shape. The housing 400 is disposed along a passage PA in which the transaction subject advances in the direction of an arrow shown in the figure. The passage PA has an entrance on the side where the transaction subject who advances in the direction of the arrow shown in the figure enters, and an exit on the side where the transaction subject exits. The transaction subject who enters from the entrance passes through the passage PA and exits from the exit, and thus, can exit for example, from the inside of the store to the outside of the store. Alternatively, the transaction subject may move from one location to another within the store.

In the housing 400, of four surfaces extending upward from four sides of a surface that is in contact with the floor surface of the passage PA, one surface disposed along the passage PA is a side surface 401, one surface disposed toward the inside of the store is a front surface 402, and one surface opposite to the surface that is in contact with the floor surface of the passage PA is an upper surface 403. A joining part between the front surface 402 and the upper surface 403 is defined as a folder 404 of the first POS terminal 11-1.

The folder 404 holds the printer 58, the fixed scanner 57, and the touch panel 56 of the first POS terminal 11-1. Specifically, the folder 404 holds the printer 58 such that an issue port 581 for a receipt is on the front surface 402 side. The folder 404 holds the fixed scanner 57 to the upper part of the printer 58 such that a reading window 571 is on the front surface 402 side. The folder 404 holds the touch panel 56 above the fixed scanner 57 such that a screen 561 is on the front surface 402 side. With this arrangement, the transaction subject standing in front of the gate mechanism 40 can easily receive a receipt issued from the issue port 581, for example. The transaction subject can, for example, easily hold the machine-readable code displayed on the display of the mobile terminal 21 over a reading window 571 of the fixed scanner 57. The transaction subject can perform a touch operation while viewing an image displayed on the touch panel 56.

A hand-held scanner, namely the hand-held scanner 71, connected to the scanner interface 59 is latched to a side surface of the folder 404 opposite to the side surface 401. Although not shown, a card reader connected to the card reader interface 60, an automatic change device connected to the change device interface 61, and the like are also disposed near the housing 400. For example, the card reader may be disposed on the upper surface 403 of the housing 400.

A patrol lamp 42 and a display 45 are attached to the upper surface 403 of the housing 400. The patrol lamp 42 is provided at a top portion of a pole 421 which is attached to the upper surface 403 to a side near to a surface opposite to the front surface 402 of the housing 400, namely, a back surface. The display 45 is disposed on the front side of this pole 421 with a screen 451 facing toward the front surface 402 side. The display 45 may be a display device having a screen smaller than that of the touch panel 56.

The human detection sensor 41, the LED 43, and the speaker 44 are built in the housing 400. The housing 400 has a slit 405 for the human detection sensor 41 and slits 406 for the LED 43 formed in the side surface 401 along the passage PA. The human detection sensor 41 is an infrared sensor that senses the movement or heat of a person passing by the position of the slit 405. The human detection sensor 41 may detect a person passing by the position of the slit 405 by a method other than infrared rays. The LED 43 is turned on or off in a predetermined color and pattern such that light for guiding the transaction subject to advance in the passage PA in the arrow direction shines through the slits 406.

Hereinafter, in the passage PA, an entrance side where the transaction subject enters, that is, a side where the touch panel 56, the fixed scanner 57, and the like are provided, is referred to as an upstream portion, and an exit side opposite to the entrance side, that is, a side where the display 45, the patrol lamp 42, and the like are provided, is referred to as downstream.

The first POS terminal 11-1 provided to the housing 400 so as to correspond to the gate mechanism 40 having such a configuration in a one-to-one correspondence is an example of a settlement apparatus that can settle a transaction with a transaction subject at an upstream portion of the passage PA in which the transaction subject advances in the direction of the arrow illustrated in the drawing. The positional relationship of the touch panel 56, the fixed scanner 57, the printer 58, and the like constituting the first POS terminal 11-1 with respect to the housing 400 is not limited to that illustrated in FIG. 4. In other words, the touch panel 56, the fixed scanner 57, the printer 58, and the like may be disposed in positions where the transaction subject located at an upstream portion of the passage PA can easily operate them.

### (Explanation of Function of First POS Terminal)

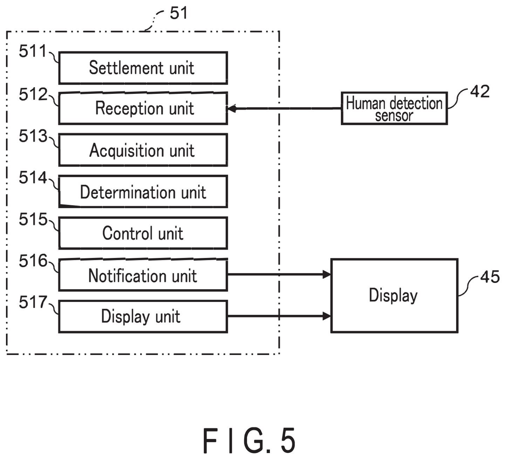

FIG. 5 is a schematic diagram illustrating a main functional configuration of the processor 51 of the first POS terminal 11-1. As illustrated in FIG. 5, the processor 51 has functions as a settlement unit 511, a reception unit 512, an acquisition unit 513, a determination unit 514, a control unit 515, a notification unit 516, and a display unit 517.

The settlement unit 511 has a function to settle a transaction with a transaction subject at an upstream portion of the passage PA through which the transaction subject passes. Upon the machine-readable code for code settlement being read by the fixed scanner 57, for example, the settlement unit 511 executes a code settlement process of paying for the transaction with the balance for code settlement. Upon an electronic money card being read by a card reader, for example, the settlement unit 511 executes an electronic money settlement process of paying for the transaction with electronic money. Upon a credit card being read by a card reader, for example, the settlement unit 511 executes a credit card settlement process of paying for the transaction with the balance of the account. For example, in the case where cash is inserted into the automatic change device, the settlement unit 511 executes a cash settlement process of paying for the transaction with the amount of money inserted. Since these settlement processes are all well-known processes, detailed description thereof will be omitted here.

The reception unit 512 has a function of receiving a signal output from a detector that can detect a person passing through the passage PA. The detector is the human detection sensor 41. The human detection sensor 41 outputs an ON signal upon detecting a person passing through the passage PA. The reception unit 512 receives the ON signal output from the human detection sensor 41 via the gate mechanism interface 62.

The acquisition unit 513 has a function of acquiring identification information for identifying a transaction with a transaction subject at an entrance to the passage PA. For example, a unique transaction number issued in a transaction with a transaction subject is identification information for identifying the transaction with the transaction subject. The transaction number is displayed in the form of a machine-readable code on the display device of the mobile terminal 21. In a case where a transaction is settled in the second POS terminal 11-2, a machine-readable code indicating the transaction number may be printed on a receipt issued from the second POS terminal 11-2. The acquisition unit 513 analyzes the machine-readable code read by the fixed scanner 57, and then acquires the transaction number, that is, the identification information for identifying the transaction with the transaction subject.

The determination unit 514 has a function of determining whether or not the transaction identified by the identification information acquired by the acquisition unit 513 has been settled. As explained with reference to FIG. 2, in the case where the transaction with the transaction subject is settled, a settlement completion flag Fa of the transaction file 26 including the transaction number which is the identification information of the transaction becomes "1". The determination unit 514 checks the settlement completion flag Fa of the transaction file 26 including the identification information, that is, the transaction number, acquired by the acquisition unit 513. In the case where the settlement completion flag Fa is "1", the determination unit 514 determines that the transaction has been settled. In the case where the settlement completion flag Fa is "0", the determination unit 514 determines that the transaction has not been settled.

The control unit 515 has a function of controlling an operation in a first mode Ma and an operation in a second mode Mb. The first mode Ma is a mode in which a notification is performed in response to a person passing through the passage PA being detected by the human detection sensor 41. The second mode Mb is a mode in which no notification is performed even if a person passing through the passage PA is detected by the human detection sensor 41. The control unit 515 controls the operation in the first mode Ma from after the transaction subject who has settled a transaction passes through the passage PA until a transaction with a next transaction subject is determined to have been settled. The control unit 515 controls the operation of the second mode Mb in which no notification is performed even if the human detection sensor 41 detects a person passing through the passage, until a predetermined time elapses after the transaction is determined to be settled or until the transaction subject whose transaction has determined to be settled passes through the passage within the predetermined time.

During the operation in the second mode Mb, the notification unit 516 has a function of notifying the remaining time of the predetermined time to the transaction subject who has been determined to have settled the transaction by the determination unit 514. For example, the notification unit 516 displays notification of the remaining time on the screen 451 of the display 45 as needed.

The display unit 517 has a function of performing a display to block passing through the passage PA during the operation in the first mode Ma and performing a display to urge passing through the passage PA during the operation in the second mode Mb. For example, during the operation in the first mode Ma, the display unit 517 displays an image or text to notify the transaction subject of blocking passing through the passage PA on the screen 451 of the display 45. During the operation in the second mode Mb, an image or text to notify the transaction subject of the passage PA being able to be passed through is displayed on the screen 451 of the display 45. The destination to display the image or text to report that the passage PA is blocked or able to be passed through may be the screen 561 of the touch panel 56.

The functions of the settlement unit 511, the reception unit 512, the acquisition unit 513, the determination unit 514, the control unit 515, the notification unit 516, and the display unit 517 described above are realized by information processing executed by the processor 51 according to a predetermined program. Hereinafter, this program is referred to as a settlement apparatus program. The settlement apparatus program is a type of application program stored in the main memory 52 or the auxiliary storage device 53. A method of installing the settlement apparatus program in the main memory 52 or the auxiliary storage device 53 is not particularly limited. The settlement apparatus program may be recorded in a removable recording medium or may be distributed by communication via a network, and may be installed in the main memory 52 or the auxiliary storage device 53. The recording medium may be in any form as long as it can store a program and can be read by a device, such as a CD-ROM, a memory card, or the like.

### (Explanation of Operation of First POS Terminal)

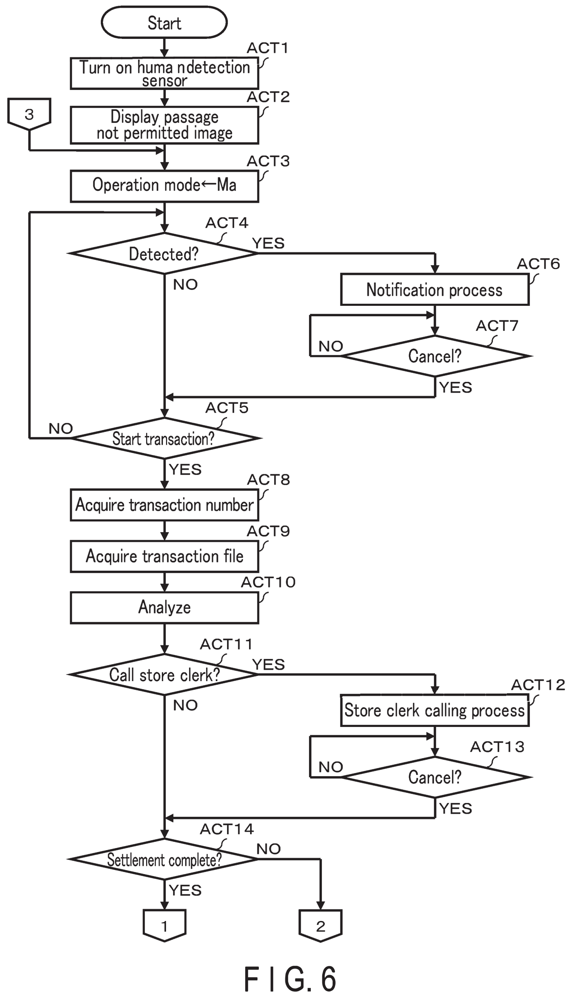

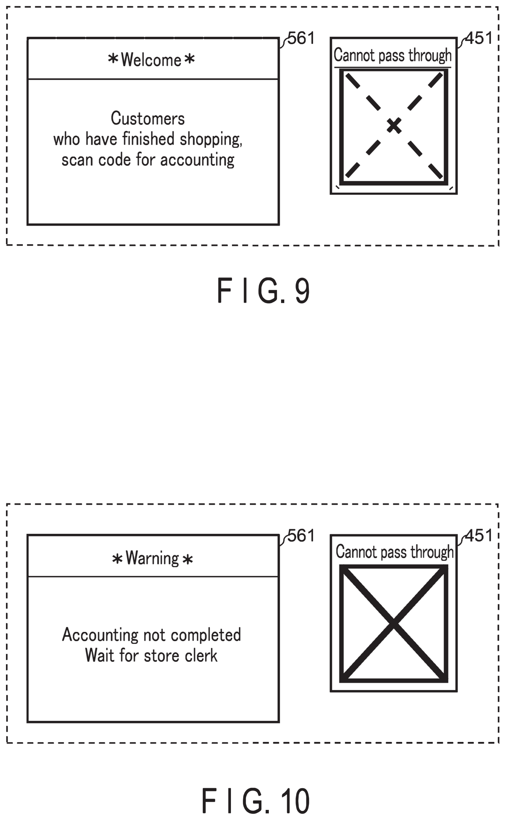

FIGS. 6 to 8 are flowcharts illustrating a procedure of main information processing executed by the processor 51 of the first POS terminal 11-1 according to the settlement apparatus program. FIGS. 9 to 12 are examples of images to be displayed on the screen 561 of the touch panel 56 and the screen 451 of the display 45 during the information processing. Hereinafter, the main operations of the first POS terminal 11-1 will be explained with reference to the drawings. It should be noted that the procedures of the information processing illustrated in the flowcharts of FIGS. 6 to 8 are examples. The procedure can be changed appropriately as long as similar effects as those of the present embodiment can be achieved. The images shown in FIGS. 9 to 12 are also examples. The content of the images can be changed appropriately as long as similar effects as those of the present embodiment can be achieved.

In the case where the settlement apparatus program is activated, the processor 51 of the first POS terminal 11-1 starts the information processing of the procedure illustrated in the flowcharts of FIGS. 6 to 8. First, the processor 51 proceeds to ACT1 in FIG. 6. The processor 51 turns on the human detection sensor 41 by energizing the human detection sensor 41 as ACT1. The human detection sensor 41 that has been turned on starts an operation to detect a person passing through the passage PA, such as emitting infrared rays.

The processor 51 that has turned on the human detection sensor 41 proceeds to ACT2. The processor 51 controls the touch panel 56 and the display 45 to display a passage not permitted image as ACT2. By this control, the passage not permitted image shown in FIG. 9 is displayed on each of the screen 561 of the touch panel 56 and the screen 451 of the display 45. That is, text for instructing the transaction subject who has come to the entrance side of the passage PA to scan the bar code for accounting with the fixed scanner 57 is displayed on the screen 561 of the touch panel 56. For example, an illustration or the like in which a person holds a bar code over the fixed scanner 57 may be displayed together with the text. On the screen 451 of the display 45, text indicating that the passage PA cannot be passed through and an image in which the "x" mark is blinking are displayed.

According to these displays, most of the transaction subjects will execute the settlement process by scanning the bar code for accounting with the fixed scanner 57 before entering the passage PA. The bar code for accounting is displayed on the display device of the mobile terminal 21. Alternatively, with the transaction subject who has completed the settlement at the second POS terminal 11-2, the bar code for accounting may be printed on the receipt.

The processor 51 that has controlled the display of the passage not permitted image proceeds to ACT3. The processor 51 sets the operation mode of the first POS terminal 11-1 to the first mode Ma as ACT3. That is, the processor 51 sets a mode in which a notification is performed in response to a person passing through the passage PA being detected by the human detection sensor 41. Then, the processor 51 checks whether or not a person passing through the passage PA is detected by the human detection sensor 41 as an ACT4. In a case where the signal of the human detection sensor 41 is an OFF signal and no person is detected, the processor 51 proceeds to ACT5. The processor 51 checks whether or not a start of transaction has been instructed as ACT5. Upon the bar code for accounting being scanned by the fixed scanner 57, the processor 51 determines that a start of transaction has been instructed. If the bar code for accounting is not scanned, that is, if a start of transaction has not been instructed, the processor 51 returns to ACT4. The processor 51 which has set the operation mode to the first mode Ma in this manner waits for a person passing through the passage PA to be detected or for a start of transaction to be instructed in ACT4 and ACT5.

In the waiting state in ACT4 and ACT5, in a case where the signal of the human detection sensor 41 becomes the ON signal before a start of transaction is instructed, the processor 51 determines that a person passing through the passage PA is detected. The processor 51 proceeds to ACT6. The processor 51 executes a notification process as ACT6. The notification process is a process of transmitting a store clerk call signal to the attendant terminal 13. The notification process controls the touch panel 56 and the display 45 to display a warning image. By this control, the warning image shown in FIG. 10 is displayed on each of the screen 561 of the touch panel 56 and the screen 451 of the display 45. That is, on the screen 451 of the display 45, the image of the "x" mark that has been blinking is turned on. On the screen 561 of the touch panel 56, text, an illustration, or the like indicating that the accounting is not completed is displayed. Further, in the notification process, a warning sound is emitted from the speaker 44, and the patrol lamp 42 is lit in red, for example.

The attendant terminal 13 that has received the store clerk call signal notifies the attendant that there is a call. Upon receiving this notification, the attendant goes to the location of the gate mechanism 40 where the patrol lamp 42 is lit in red and the warning sound is being emitted, and takes an action for unauthorized passage or the like. The attendant causes the hand-held scanner 71 to read the employee code printed on the ID card in the form of a machine-readable code. Upon the employee code being read, the operation mode of the first POS terminal 11-1 is temporarily switched to an employee mode. By switching to the employee mode, the first POS terminal 11-1 can cancel the notification process, thus the attendant cancels the notification process by operating the touch panel 56, for example. In the case where the notification process is canceled, the warning sound is stopped, the patrol lamp 42 is turned off, and the operation mode of the first POS terminal 11-1 returns to the first mode Ma.

The processor 51 that has performed the notification process in ACT6 proceeds to ACT7. The processor 51 waits for the notification process to be canceled as ACT7. In the case where the notification process is canceled, the processor 51 proceeds to ACT5. The processor 51 returns to the waiting state of ACT4 and ACT5.

In the waiting state in ACT4 and ACT5, in a case where the bar code for accounting is scanned by the fixed scanner 57, the processor 51 determines that a start of transaction has been instructed. The processor 51 proceeds to ACT8. The processor 51 acquires a transaction number from the bar code for accounting as ACT8. As described above, the bar code for accounting may be displayed on the display device of the mobile terminal 21 or may be printed on the receipt.

The processor 51 that has acquired the transaction number proceeds to ACT9. The processor 51 acquires the transaction file 26 as ACT9. That is, the processor 51 outputs a request command for requesting the transaction file 26 to the mobile server 22. The request command includes the transaction number acquired in ACT8. The mobile server 22 that has received the request command detects the transaction file 26 in which the transaction number included in the command is described, and transmits the transaction file 26 to the first POS terminal 11-1 that is the transmission source of the request command. Thus, the processor 51 can acquire the transaction file 26.

The processor 51 that has acquired the transaction file 26 proceeds to ACT10. The processor 51 analyzes the transaction file 26 as ACT10, and looks up the product sales data. The processor 51 checks whether or not the product sales data of the product for which the store clerk needs to be called is described. The product for which a store clerk needs to be called is, for example, a product that requires age confirmation, such as alcoholic beverages and cigarettes. The product for which the store clerk needs to be called may be a product other than the product for which age confirmation is required.

If the transaction file 26 does not include the product sales data of the product for which the store clerk needs to be called, the processor 51 proceeds to ACT14. The process of ACT14 will be described later.

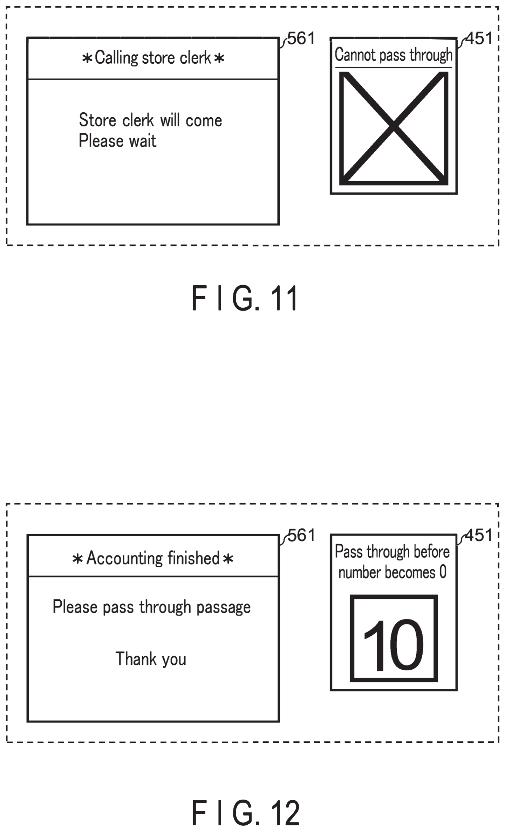

On the other hand, in a case where the product sales data of the product for which the store clerk needs to be called is described in the transaction file 26, the processor 51 proceeds to ACT12. The processor 51 executes the store clerk calling process as ACT12. The store clerk calling process is a process of transmitting a store clerk call signal to the attendant terminal 13, similar to the notification process. Further, the store clerk calling process controls the display of the store clerk call image on the touch panel 56 and the display 45. By this control, the store clerk call image illustrated in FIG. 11 is displayed on each of the screen 561 of the touch panel 56 and the screen 451 of the display 45. That is, on the screen 451 of the display 45, the image of the "x" mark that has been blinking is turned on. On the screen 561 of the touch panel 56, text, an illustration, or the like indicating that the store clerk is being called is displayed. Further, the store clerk calling process is a process of emitting a sound for calling attention from the speaker 44 and turning on the patrol lamp 42 in green, for example. The sound for calling attention may be the same as or different from the warning sound. For example, the warning sound may be a continuous sound of "beep", but the sound for calling attention may be an intermittent sound of "beep, beep".

The attendant terminal 13 that has received the store clerk call signal notifies the attendant of the call. Upon receiving this notification, the attendant goes to the location of the gate mechanism 40 where the patrol lamp 42 is lit in green and the sound for calling attention is being emitted, and performs an action such as age confirmation. The attendant causes the hand-held scanner 71 to read the employee code printed on the ID card in the form of a machine-readable code. Upon the employee code being read, the operation mode of the first POS terminal 11-1 is temporarily switched to an employee mode. Since the first POS terminal 11-1 can cancel the store clerk calling process by switching to the employee mode, the attendant operates the touch panel 56 to cancel the store clerk calling process, for example. Upon the store clerk calling process being canceled, the sound for calling attention is stopped, the patrol lamp 42 is turned off, and the operation mode of the first POS terminal 11-1 returns to the first mode Ma.

The processor 51 that has performed the store clerk calling process in ACT12 proceeds to ACT13. The processor 51 waits for the cancellation of the store clerk calling process as ACT13. Upon the store clerk calling process being canceled, the processor 51 proceeds to ACT14.

In this way, as a result of analyzing the transaction file 26, the product sales data of the product for which store clerk calling is necessary is not included, or the product sales data of the product for which the clerk calling is necessary is included and thus the store clerk calling process is executed, and upon the store clerk calling process being canceled, the processor 51 proceeds to ACT14. The processor 51 checks whether or not the settlement is completed as ACT14. That is, the processor 51 checks the settlement completion flag Fa described in the transaction file 26. The settlement completion flag Fa is "1" in a case where the settlement of the transaction managed by the transaction file 26 is completed using the settlement unit of the mobile terminal 21 or the second POS terminal 11-2, which is another settlement unit, and is "0" in a case where the settlement is not completed. In the case where the settlement completion flag Fa is "0", the processor 51 determines that the settlement is not completed. In the case where the settlement completion flag Fa is "1", the processor 51 determines that the settlement is completed.

### <Operation for Second Transaction Subject whose transaction has been settled by another Settlement Unit>

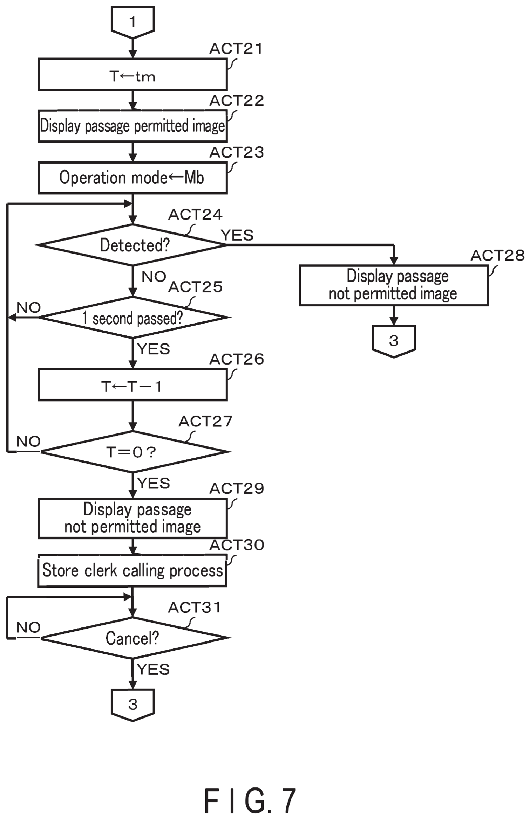

In a case where the settlement is determined to be completed in ACT14, the processor 51 proceeds to ACT21 in FIG. 7. The processor 51 sets a time counter T to time Tm, which is a first initial value, as ACT21. The time counter T is a subtraction counter that subtracts "1" from the count value every time one second elapses. The time Tm is a time that is assumed to be required for the transaction subject who has completed the settlement at a POS terminal other than the first POS terminal 11-1 to pass through the passage PA. That is, the time Tm is a predetermined time that is assumed to be required for the transaction subject who has completed the settlement using the settlement application installed in the mobile terminal 21 or for the transaction subject who has completed the settlement using the second POS terminal 11-2 to pass through the passage PA. The time Tm is arbitrary. In the present embodiment, the time Tm is set to 10 seconds.

The processor 51 that has set the time Tm in the time counter T proceeds to ACT22. The processor 51 controls the touch panel 56 and the display 45 to display the passage permitted image as ACT22. By this control, the passage permitted image shown in FIG. 12 is displayed on each of the screen 561 of the touch panel 56 and the screen 451 of the display 45. That is, text, an illustration, or the like indicating that a transaction subject may pass through the passage is displayed on the screen 561 of the touch panel 56. On the screen 451 of the display 45, a number indicating the count value of the time counter T and text prompting the transaction person to pass through the passage before the number becomes "0" are displayed. Further, the LED 43 emits light such that the light for guiding the transaction subject to travel through the passage PA in the arrow direction shines through the slits 406.

According to these displays, the transaction subject who has completed the transaction will pass through the passage PA before the count value of the time counter T becomes "0".

The processor 51 that has controlled the display of the passage permitted image proceeds to ACT23. The processor 51 sets the operation mode of the first POS terminal 11-1 to the second mode Mb as ACT23. That is, the processor 51 sets a mode in which no notification is performed even if a person passing through the passage PA is detected by the human detection sensor 41. Then, the processor 51 checks whether or not a person passing through the passage PA is detected by the human detection sensor 41 as an ACT24. In a case where the signal of the human detection sensor 41 is an OFF signal and no person is detected, the processor 51 proceeds to ACT25. The processor 51 checks whether or not the time measured by the clock 54 has passed one second as ACT25. If one second has not elapsed, the processor 51 returns to ACT24. On the other hand, in the case where one second has elapsed, the processor 51 proceeds to ACT26. The processor 51 subtracts "1" from the time counter T as ACT26. Then, the processor 51 checks whether or not the time counter T has reached "0" as ACT27. In the case where the time counter T is a value larger than "0", the processor 51 returns to ACT24.

In this way, the processor 51 which has set the operation mode to the second mode Mb waits for a person passing through the passage PA to be detected by the human detection sensor 41 or for the time counter T to become "0" in ACT24 to ACT27. During this time, the processor 51 subtracts the number displayed on the screen 451 of the display 45 in accordance with the time counter T.

In the waiting state from ACT24 to ACT27, upon a person passing through the passage PA being detected by the human detection sensor 41, the processor 51 proceeds to ACT28. The processor 51 controls the touch panel 56 and the display 45 to display a passage not permitted image as ACT28. By this control, the passage not permitted image shown in FIG. 9 is displayed on each of the screen 561 of the touch panel 56 and the screen 451 of the display 45. The LED 43 is turned off. Thereafter, the processor 51 returns to ACT3 of FIG. 6. The processor 51 sets the operation mode of the first POS terminal 11-1 to the first mode Ma, and enters a waiting state for ACT4 and ACT5.

On the other hand, in a case where the time counter T becomes "0" without detecting a person passing through the passage PA, the processor 51 proceeds to ACT29. The processor 51 controls the touch panel 56 and the display 45 to display the passage not permitted image as ACT29. By this control, the passage not permitted image shown in FIG. 9 is displayed on each of the screen 561 of the touch panel 56 and the screen 451 of the display 45. The LED 43 is turned off.

The time counter T becoming "0" without a person passing through the passage PA being detected is considered to be an event in which a transaction subject permitted to pass through the passage PA cannot pass through the passage PA due to some trouble occurring. Then, the processor 51 that has controlled the display of the passage not permitted image proceeds to ACT30. The processor 51 executes the store clerk calling process as ACT30. By the store clerk calling process, a store clerk call signal is transmitted to the attendant terminal 13. Further, the store clerk call image illustrated in FIG. 11 is displayed on each of the screen 561 of the touch panel 56 and the screen 451 of the display 45. Further, a sound for calling attention is emitted from the speaker 44, and the patrol lamp 42 is lit in green.

The attendant terminal 13 that has received the store clerk call signal notifies the attendant of the call. Upon receiving this notification, the attendant goes to the location of the gate mechanism 40 where the patrol lamp 42 is lit in green and the sound for calling attention is being emitted, and handles the event in which the transaction subject could not pass through the passage PA within the predetermined time. The attendant who has finished the handling switches the operation mode of the first POS terminal 11-1 to the employee mode and performs an operation to cancel the calling.

The processor 51 that has performed the store clerk calling process proceeds to ACT31. The processor 51 waits for the cancellation of the store clerk calling process as ACT31. When the store clerk calling process is canceled, the processor 51 returns to ACT3 of FIG. 6. The processor 51 sets the operation mode of the first POS terminal 11-1 to the first mode Ma, and enters a waiting state for ACT4 and ACT5.

### <Operation for First Transaction Subject who has not completed settlement by another Settlement Unit>

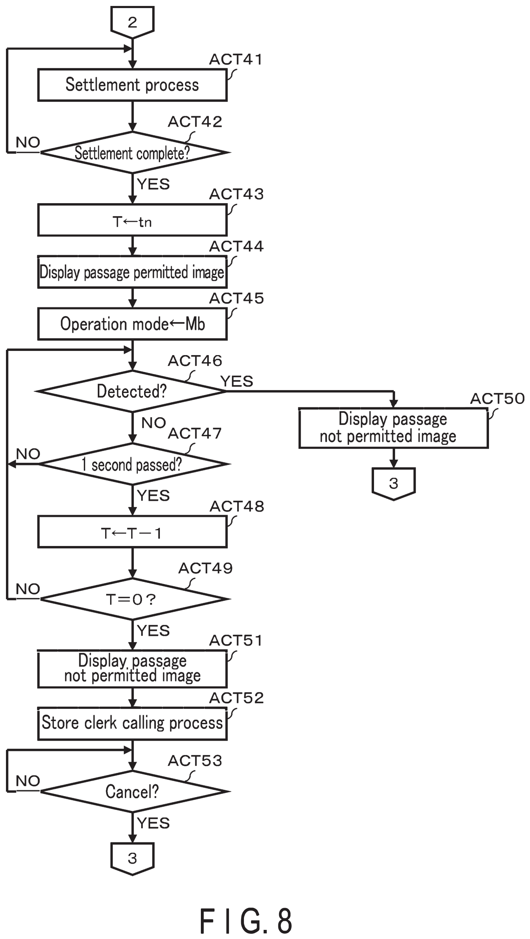

In a case where the settlement is determined to be not completed in ACT14, the processor 51 proceeds to ACT41 in FIG. 8. The processor 51 performs a settlement process as ACT41. The settlement process includes cashless settlement, for example, the above-described code settlement process, electronic money settlement process, or credit card settlement process, etc. In the case of cashless settlement, the time required for settlement processing is shorter than that of cash settlement, and thus cashless settlement is preferable in this embodiment. The settlement process may be a cash settlement process in which payment for a transaction is paid by an amount of money inserted.

The processor 51 waits for the settlement processing to be completed as ACT42. Upon completion of the settlement processing, the processor 51 proceeds to ACT43. The processor 51 sets the time counter T to a time Tn, which is a second initial value, as ACT43. The time Tn is a time that is assumed to be required for a transaction subject whose transaction has been settled in the first POS terminal 11-1 to pass through the passage PA. That is, the time Tn is a predetermined time that is assumed to be required for a transaction subject whose transaction has been settled in the first POS terminal 11-1 to pass through the passage PA. The transaction subject who has completed the settlement is assumed to enter the passage PA after putting, for example, a smartphone, a credit card, a wallet, or the like into a bag. Therefore, the time Tn is arbitrary as with the time Tm, but is preferably longer than the time Tm. In this embodiment, the time Tn is set to 15 seconds.

The processor 51 that has set the time Tn in the time counter T proceeds to ACT44. The processor 51 controls the touch panel 56 and the display 45 to display the passage permitted image as ACT44. By this control, the passage permitted image shown in FIG. 12 is displayed on each of the screen 561 of the touch panel 56 and the screen 451 of the display 45. Further, the LED 43 emits light such that the light for guiding the transaction subject to proceed through the passage PA in the arrow direction shines through the slits 406.

According to these displays, the transaction subject who has finished the transaction and has put the smartphone, the credit card, the wallet, or the like into the bag will pass through the passage PA before the count value of the time counter T becomes "0".

The processor 51 that has controlled the display of the passage permitted image proceeds to ACT45. The processor 51 sets the operation mode of the first POS terminal 11-1 to the second mode Mb as ACT45. That is, the processor 51 sets a mode in which no notification is performed even if a person passing through the passage PA is detected by the human detection sensor 41. Thereafter, the processor 51 executes the same processing as that of ACT24 to ACT31 in FIG. 7 as ACT46 to ACT53. That is, the processor 51 waits for a person passing through the passage PA to be detected by the human detection sensor 41 or for the time counter T to become "0". During this time, the processor 51 subtracts the number displayed on the screen 451 of the display 45 in accordance with the time counter T.

Upon detecting a person passing through the passage PA by the human detection sensor 41, the processor 51 controls the passage not permitted display. The processor 51 sets the operation mode of the first POS terminal 11-1 to the first mode Ma and enters a waiting state for ACT4 and ACT5.

On the other hand, in a case where the time counter T becomes "0" without detecting a person passing through the passage PA, the processor 51 controls the passage not permitted display. The processor 51 executes a store clerk calling process. Then, when the store clerk calling processing is canceled, the processor 51 sets the operation mode of the first POS terminal 11-1 to the first mode Ma, and enters a waiting state for ACT4 and ACT5.

Here, the processor 51 realizes the function as the settlement unit 511 by executing the process of ACT41. The processor 51 cooperates with the gate mechanism interface 62 to execute the processes of ACT4, ACT24, and ACT46, thereby realizing the function as the reception unit. The processor 51 realizes the function as the acquisition unit 513 by executing the processes of ACT5 and ACT6 in cooperation with the fixed scanner 57. The scanner may be the hand-held scanner 71 instead of the fixed scanner 57. The processor 51 realizes the function of the determination unit 514 by executing the process of ACT14. The processor 51 realizes the function as the control unit 515 by executing the processes of ACT3 and ACT23. The processor 51 cooperates with the display 45 to execute the processes of ACT22 and ACT26 and the processes of ACT44 and ACT48, thereby realizing the function as the notification unit 516. The processor 51 cooperates with the display 45 and the touch panel 56 to execute the processes of ACT2, ACT22, ACT28, ACT29, ACT44, ACT50, and ACT51, thereby realizing the function as the display unit 517.

### (Effects of First POS Terminal)

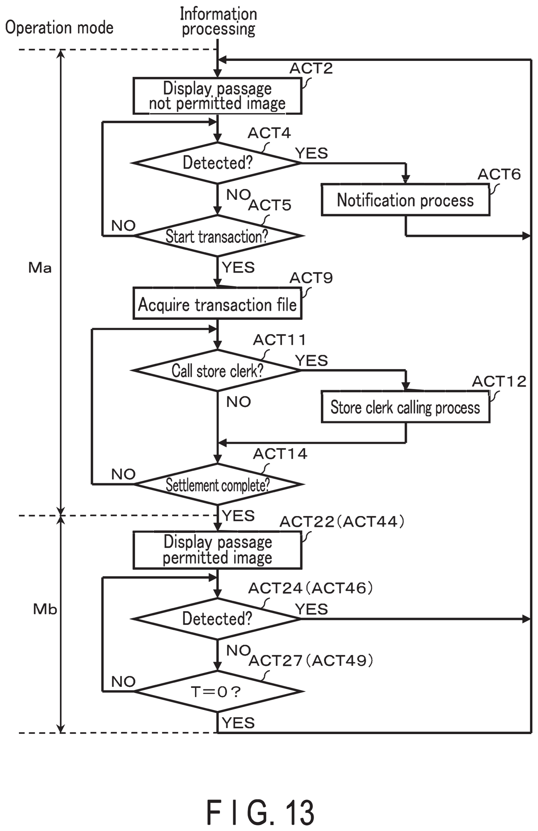

FIG. 13 is a sequence diagram illustrating a correspondence relationship between the operation mode of the first POS terminal 11-1 and main information processing. The same reference numerals are given to the same parts as those in the information processing explained with reference to FIGS. 5 to 8. Hereinafter, effects of the first POS terminal 11-1 associated with the gate mechanism 40 in a one-to-one correspondence will be explained with reference to FIG. 13.

In the first POS terminal 11-1, the first mode Ma is selected as the operation mode in an idle state in which a start of transaction has not been instructed. In the first mode Ma, for example, the passage not permitted image shown in FIG. 9 is displayed on the touch panel 56 and the display 45 (ACT2). At this time, upon the human detection sensor 41 detecting a person passing through the passage Pa (YES in ACT4), the first POS terminal 11-1 executes notification processing (ACT6). By this notification processing, a store clerk call signal is transmitted to the attendant terminal 13. Further, for example, the warning image shown in FIG. 10 is displayed on the touch panel 56 and the display 45. Further, the speaker 44 emits the warning sound, and the patrol lamp 42 is lit in red, for example. In this way, the notification process is executed in the case where there is a person who is attempting to pass through the passage Pa in an unauthorized manner, and thus it is possible to prevent unauthorized passage of a person.

In the case where the transaction subject who comes to the entrance side of the passage holds the bar code for accounting over the reading window 571 of the fixed scanner 57, a start of transaction instruction is issued to the first POS terminal 11-1 (YES in ACT5). In response to the instruction to start transaction, the first POS terminal 11-1 acquires the transaction file 26 of the transaction subject from the mobile server 22 (ACT9). At this time, in a case where product sales data of a product requiring the calling of the store clerk is described in the transaction file 26, the store clerk calling process is executed. Via the store clerk calling process, a store clerk call signal is transmitted to the attendant terminal 13. In addition, for example, the store clerk call image illustrated in FIG. 11 is displayed on the touch panel 56 and the display 45. Further, a sound for calling attention is emitted from the speaker 44, and the patrol lamp 42 is lit in green. Via such a store clerk calling process, the attendant can certainly take necessary actions such as checking the age of the transaction subject who has purchased the product that needs to be checked by the store clerk.

In this regard, in a case where the transaction subject attempts to pass through the passage PA before the action by the attendant finishes, the notification process is executed. Therefore, it is possible to prevent the transaction subject who has purchased the product that needs to be checked by the store clerk from going out of the store without being checked by the attendant.

Incidentally, among the transaction subjects, there will be a transaction subject who has completed settlement using, for example, a settlement application installed in the mobile terminal 21 before coming to the entrance of the passage PA. Alternatively, there will be a transaction subject whose transaction has been settled in the second POS terminal 11-2. The transaction subject who has completed the settlement by another settlement unit in this manner is referred to as a second transaction subject. In contrast, a transaction subject who has not completed settlement of the transaction yet is referred to as a first transaction subject. The settlement completion flag Fa described in the transaction file 26 of the second transaction subject is "1". The settlement completion flag Fa described in the transaction file 26 of the first transaction subject is "0". The first transaction subject settles the transaction at the first POS terminal 11-1. In the case where the settlement is completed, the settlement completion flag Fa is set to "1".

Thus, in the case where the transaction of not only the second transaction subject but also the first transaction subject is settled (YES in ACT14), the operation mode is switched from the first mode Ma to the second mode Mb. Then, for example, a passage permitted image shown in FIG. 12 (ACT22 or ACT44) is displayed on the touch panel 56 and the display 45.

Therefore, the transaction subject who has completed the transaction can go through the passage PA, for example, to outside of the store. At this time, the human detection sensor 41 detects the transaction subject passing through the passage PA (YES in ACT24 or ACT46), but the notification process is not executed. Instead, the operation mode is switched from the second mode Mb to the first mode Ma. Therefore, in a case where a different person tries to pass through the passage PA without authorization following the transaction subject who has completed the transaction, the notification process is executed. As a result, it is possible to certainly prevent fraud in which a different person passes through the passage PA following the transaction subject who has completed the transaction.

Incidentally, also in the case where the predetermined time Tm or Tn has elapsed without the transaction subject being detected by the human detection sensor 41 after the passage permitted image is displayed (YES in ACT27 or ACT49), the operation mode is switched from the second mode Mb to the first mode Ma. Therefore, in a case where an event occurs in which the transaction subject cannot pass through passage PA due to some trouble occurring to the transaction subject who has been permitted to pass through the passage PA, the passage becomes impassable after the predetermined time Tm or Tn elapses. The predetermined time Tm or Tn is a time assumed to be required for the transaction subject who has completed the settlement to pass through the passage PA, and is, for example, about 10 seconds to 15 seconds. Therefore, since the state where the passage PA is passable is not continued indefinitely, it is possible to prevent a different person from passing through the passage PA without authorization instead of the transaction subject permitted to pass through the passage PA.

The display 45 displays the remaining time until the predetermined time Tm or Tn elapses as the passage permitted image. Therefore, the transaction subject can easily know until when to pass through the passage PA.

Incidentally, the predetermined time from when the passage permitted image is displayed until the operation mode is switched from the second mode Mb to the first mode Ma is set such that the time Tn for the first transaction subject is longer than the time Tm for the second transaction subject. With the first transaction subject, there is a case where after the transaction has been settled at the first POS terminal 11-1, the first transaction subject enters the passage PA after putting, for example, a smartphone, a credit card, a wallet, or the like into a bag. In this case, if the time Tm for the second transaction subject is adopted as it is, there is a possibility that the mode is switched to the second mode before the transaction subject passes through the passage PA. In the present embodiment, such an issue is prevented by setting the time Tn for the first transaction subject to be longer than the time Tm for the second transaction subject.

Although the embodiment of the settlement apparatus that can prevent fraud in which the transaction subject leaves the store without performing settlement has been described above, the embodiment is not limited thereto.

For example, the identification information for identifying the transaction with the transaction subject is not limited to the transaction number. In a case where member registration is necessary for using the mobile terminal 21, a unique member number assigned to the transaction subject by the member registration may be used as the identification information for identifying the transaction with the transaction subject.

In this embodiment, as the other settlement unit, two settlement units, that is, the settlement unit of the mobile terminal in which the settlement application is installed and the settlement unit of the second POS terminal 11-2 are exemplified. The other settlement unit may be one of the two settlement units. Alternatively, the transactions with all the transaction subjects may be settled by the settlement unit of the first POS terminal 11-1.

In this embodiment, in the case where a predetermined time has elapsed after the transaction is determined to have been settled or in the case where the transaction subject who has been determined to have settled the transaction passes through the passage PA within the predetermined time, the operation mode is changed from the second mode to the first mode. As another embodiment, the operation mode may be changed from the second mode to the first mode in a case where a predetermined time has elapsed after the transaction is determined to have been settled, regardless of whether or not the transaction subject has passed through the passage PA within the predetermined time. By setting the predetermined time as short as possible, it becomes difficult for a different person to pass through the passage PA without authorization after the transaction subject who is determined to have settled the transaction has passed through the passage PA. In such a case, the effect of blocking unauthorized passage can be achieved even when the other embodiments described above are adopted.

Each of one or more circuits constituting the processing circuit executes one or more processes among a plurality of processes. In a case where the processing circuit is configured by a single circuit, the single circuit executes all of the plurality of processes. In a case where the processing circuit is configured by a plurality of circuits, each of the plurality of circuits executes a part of the plurality of processes. A part of the plurality of processes may be one of the plurality of processes or may be two or more of the plurality of processes. In a case where the processing circuitry is configured by a plurality of circuits, the plurality of circuits may be included in one device or may be distributed in a plurality of devices.

The program according to this embodiment may be transferred in a state of being stored in the device or may be transferred in a state of not being stored in the device. In the latter case, the program may be transferred via a network, or may be transferred in a state of being recorded in a recording medium. The recording medium is a non-transitory tangible medium. The recording medium is a computer-readable medium. The recording medium may be any medium that can store a program and can be read by a computer, such as a CD-ROM or a memory card, and the form thereof is not limited.

While some embodiments of the present invention have been described, these embodiments have been presented by way of example only, and are not intended to limit the scope of the inventions. The novel embodiments may be embodied in a variety of other forms; various omissions, substitutions, and changes in the form of the embodiments described herein may be made without departing from the spirit of the inventions. These embodiments and modifications thereof are included in the scope of the invention and are included in the invention described in the claims and the scope of equivalents thereof.

The above-described embodiments may be expressed as follows.
(1) A settlement apparatus comprising: a settlement unit configured to settle a transaction with a transaction subject at an upstream portion of a passage through which the transaction subject passes;
   a reception unit configured to receive a signal output from a detector that can detect a person passing through the passage;
   an acquisition unit configured to acquire identification information for identifying a transaction with the transaction subject, at an upstream portion of the passage;
   a determination unit configured to determine whether or not the transaction identified by the identification information acquired by the acquisition unit has been settled;
   a control unit configured to control an operation in a first mode in which a notification is performed in response to the detector detecting a person passing through the passage, from after the transaction subject who has settled the transaction passes through the passage, until a transaction with a next transaction subject is determined to have been settled, and configured to control an operation in a second mode in which no notification is performed in response to the detector detecting a person passing through the passage, until a predetermined time elapses from after the transaction is determined to have been settled or until a transaction subject whose transaction has been determined to be settled passes through the passage within the predetermined time.
(2) The settlement apparatus according to (1), further comprises: a notification unit configured to notify a remaining time of the predetermined time to a transaction subject whose transaction has been determined to be settled by the determination unit, during the operation in the second mode.
(3) The settlement apparatus according to (1), further comprises: a display unit configured to perform a display to block passing through the passage during the operation in the first mode, and configured to perform a display to urge passing through the passage during the operation in the second mode.
(4) The settlement apparatus according to (1), wherein the determination unit is configured to further determine whether the transaction subject is a first transaction subject whose transaction has been settled by the settlement unit included in the settlement apparatus or is a second transaction subject whose transaction has been settled by another settlement unit, and
   the control unit is configured to change the predetermined time during an operation in the second mode between a case in which the transaction subject whose transaction has been determined to be settled by the determination unit is the first transaction subject and a case in which the transaction subject whose transaction has been determined to be settled by the determination unit is the second transaction subject.
(5) The settlement apparatus according to (1), wherein, in a case where a transaction identified by the identification information acquired by the acquisition unit needs to be checked by a store clerk, the determination unit determines whether or not the transaction has been settled after receiving an input of a confirmation operation by the store clerk.
(6) A program recording medium on which a program is recorded for causing a computer of a settlement apparatus provided at an upstream portion of a passage through which a transaction subject passes to realize:
   a settlement function to settle a transaction with the transaction subject;
   a reception function to receive a signal output from a detector that can detect a person passing through the passage;
   an acquisition function to acquire identification information for identifying a transaction with the transaction subject, at an upstream portion of the passage;
   a determination function to determine whether or not the transaction identified by the identification information acquired by the acquisition function has been settled; and
   a control function to control an operation in a first mode in which a notification is performed in response to the detector detecting a person passing through the passage, from after the transaction subject who has settled the transaction passes through the passage, until a transaction with a next transaction subject is determined to have been settled, and control an operation in a second mode in which no notification is performed in response to the detector detecting a person passing through the passage, until a predetermined time elapses from after the transaction is determined to have been settled, or until a transaction subject who has been determined to have settled the transaction passes through the passage within the predetermined time.

## Claims

1. A settlement apparatus comprising:
a settlement unit configured to settle a transaction with a transaction subject at an upstream portion of a passage through which the transaction subject passes;
a reception unit configured to receive a signal output from a detector that can detect a person passing through the passage;
an acquisition unit configured to acquire identification information for identifying a transaction with the transaction subject, at an upstream portion of the passage;
a determination unit configured to determine whether or not the transaction identified by the identification information acquired by the acquisition unit has been settled; and
a control unit configured to
control an operation in a first mode in which a notification is performed in response to the detector detecting a person passing through the passage, from after the transaction subject who has settled the transaction passes through the passage, until a transaction with a next transaction subject is determined to have been settled, and
control an operation in a second mode in which no notification is performed in response to the detector detecting a person passing through the passage, until a predetermined time elapses from after the transaction is determined to have been settled, or until a transaction subject whose transaction has been determined to be settled passes through the passage within the predetermined time.

2. The settlement apparatus according to claim 1, further comprising:
a notification unit configured to notify a remaining time of the predetermined time to a transaction subject whose transaction has been determined to be settled by the determination unit, during the operation in the second mode.

3. The settlement apparatus according to claim 1, further comprising:
a display unit configured to perform a display to block passing through the passage during the operation in the first mode, and configured to perform a display to urge passing through the passage during the operation in the second mode.

4. The settlement apparatus according to claim 1, wherein
the determination unit is configured to further determine whether the transaction subject is a first transaction subject whose transaction has been settled by the settlement unit included in the settlement apparatus or is a second transaction subject whose transaction has been settled by another settlement unit, and
the control unit is configured to change the predetermined time during an operation in the second mode between a case in which the transaction subject whose transaction has been determined to be settled by the determination unit is the first transaction subject and a case in which the transaction subject whose transaction has been determined to be settled by the determination unit is the second transaction subject.

5. The settlement apparatus according to claim 1, wherein
in a case where a transaction identified by the identification information acquired by the acquisition unit needs to be checked by a store clerk, the determination unit determines whether or not the transaction has been settled after receiving an input of a confirmation operation by the store clerk.

6. A program recording medium on which a program is recorded for causing a computer of a settlement apparatus provided at an upstream portion of a passage through which a transaction subject passes to realize:
a settlement function to settle a transaction with the transaction subject;
a reception function to receive a signal output from a detector that can detect a person passing through the passage;
an acquisition function to acquire identification information for identifying a transaction with the transaction subject, at an upstream portion of the passage;
a determination function to determine whether or not the transaction identified by the identification information acquired by the acquisition function has been settled; and
a control function to
control an operation in a first mode in which a notification is performed in response to the detector detecting a person passing through the passage, from after the transaction subject who has settled the transaction passes through the passage, until a transaction with a next transaction subject is determined to have been settled, and
control an operation in a second mode in which no notification is performed in response to the detector detecting a person passing through the passage, until a predetermined time elapses from after the transaction is determined to have been settled, or until a transaction subject who has been determined to have settled the transaction passes through the passage within the predetermined time.
